# EUROPÄISCHE PATENTSCHRIFT

(11) **EP 2 790 952 B1**
(45) Veröffentlichungstag und Bekanntmachung des Hinweises auf die Patenterteilung: **16.09.2015**
(21) Anmeldenummer: 12784500.6
(22) Anmeldetag: 16.10.2012
(51) Int. Cl.: B60K 26/02, B60N 2/00, B60R 21/015

(54) **VERFAHREN UND VORRICHTUNG ZUM PLAUSIBILISIEREN EINES SIGNALS VON EINEM SITZSENSOR IN EINEM KRAFTFAHRZEUG**
METHOD AND DEVICE FOR CHECKING THE PLAUSIBILITY OF A SIGNAL FROM A SEAT SENSOR IN A MOTOR VEHICLE
PROCÉDÉ ET DISPOSITIF DE VALIDATION D'UN SIGNAL PROVENANT D'UN CAPTEUR DE SIÈGE DANS UN VÉHICULE À MOTEUR

(30) Priorität: 12.12.2011 DE 102011088308
(43) Veröffentlichungstag der Anmeldung: 22.10.2014
(73) Patentinhaber: Robert Bosch GmbH, 70442 Stuttgart (DE)
(72) Erfinder: SIEBER, Udo, 74321 Bietigheim (DE)
(86) Internationale Anmeldenummer: PCT/EP2012/070446
(87) Internationale Veröffentlichungsnummer: WO 2013/087257

(56) Entgegenhaltungen:
- DE-A1- 3 232 160
- DE-A1- 10 101 656
- DE-A1- 10 304 570
- DE-A1-102007 035 924

## Beschreibung

### Gebiet der Erfindung

Die vorliegende Erfindung betrifft ein Verfahren sowie eine Vorrichtung zum Plausibilisieren eines Signals von einem Sitzsensor in einem Kraftfahrzeug, wobei der Sitzsensor so ausgelegt ist, eine Information über ein Gewicht eines Fahrers in dem Fahrzeug zu erfassen. Die Erfindung betrifft ferner ein Computerprogrammprodukt sowie ein computerlesbares Medium mit einem darauf gespeicherten Computerprogrammprodukt, welches dazu ausgelegt ist, bei Ausführung auf einem programmierbaren Steuergerät das erfindungsgemäße Verfahren durchzuführen.

### Stand der Technik

In modernen Fahrzeugen werden Sitzbelegungssensoren dazu eingesetzt, um festzustellen, ob ein Sitz in dem Fahrzeug belegt ist, um gegebenenfalls eine Warnfunktion wie z.B. eine Anzeige "Gurt anlegen" auslösen zu können.

Die DE 101 01 656 A1 beschreibt eine Vorrichtung zur Insassenklassifizierung in einem Fahrzeug, die dazu dient, mit einem jeweiligen CO2-Sensor und unter Verwendung eines Sitzsensors eine Insassenklassifizierung durchzuführen.

Für eine erweiterte Funktionalität können solche Sitzsensoren dazu ausgelegt sein, nicht nur festzustellen, ob ein Sitz belegt ist oder nicht, sondern um ferner auch eine Information über ein Gewicht des auf dem jeweiligen Sitz sitzenden Fahrzeuginsassen anzugeben. Eine solche Funktionalität kann z.B. notwendig sein, um ein Auslösen eines Airbags spezifisch an das Gewicht der hinter dem Airbag sitzenden Person anpassen zu können. Eine Fehlfunktion des das Gewicht erfassenden Sitzsensors kann dabei insbesondere bei einer Airbag-Ansteuerung sicherheitskritisch sein.

Die DE 32 32 160 A1 beschreibt ein Verfahren und eine Anordnung zur Übermittlung von Informationen an Fahrer von Kraftfahrzeugen. Dabei werden die Informationen als haptisch wahrnehmbare Signale durch eine Änderung der Rückstellkraft eines Fahrpedals an den Fahrer übermittelt.

### Offenbarung der Erfindung

Das hierin vorgeschlagene Verfahren bzw. die vorgeschlagene Vorrichtung ermöglicht ein einfaches Plausibilisieren eines Signals von einem Sitzsensor, der ein Gewicht eines Fahrers in einem Kraftfahrzeug erfassen soll. Es kann dabei auf ohnehin in dem Fahrzeug vorgesehene Komponenten zurückgegriffen werden, so dass ein Zusatzaufwand durch z.B. redundante Sensorik vermieden werden kann.

Erfindungsgemäß wird zusätzlich zu dem Erfassen des Signals von dem Sitzsensor auch ein Einstellwert erfasst, der eine Stärke einer Kraft angibt, mit der ein Fahrpedal dem Fahrer ein haptisch wahrnehmbares Signal übermitteln soll. Durch ein Vergleichen mit diesem erfassten Einstellwert kann das Signal von dem Sitzsensor plausibilisiert werden.

Ideen zu der Erfindung können als auf den folgenden Überlegungen basierend angesehen werden:
In modernen Kraftfahrzeugen können einem Fahrer eine Vielzahl von Informationen bereitgestellt werden, um ihn beim Führen des Fahrzeugs zu unterstützen. Neben einer optischen oder akustischen Übermittlung von Signalen werden dabei auch haptisch wahrnehmbare Signale erzeugt, um dem Fahrer Informationen mitteilen zu können. Beispielsweise können über ein so genanntes haptisches Fahrpedal dem Fahrer bestimmte, für eine spezifische Fahrsituation nützliche Hinweise gegeben werden. Dabei kann mit Hilfe eines Aktuators eine Kraft auf das haptische Fahrpedal ausgeübt werden, die von dem Fahrer wahrgenommen werden kann. Diese Kraft kann beispielsweise dazu dienen, einen Druck, den der Fahrer notwendigerweise aufbringen muss, um das Fahrpedal niederzudrücken, temporär zu erhöhen, um dem Fahrer damit beispielsweise anzudeuten, dass aufgrund einer vorausliegenden Kurve oder einer vorausliegenden Ortseinfahrt aktuell eine weitere Beschleunigung des Fahrzeugs nicht sinnvoll sein kann. In einer anderen Funktionalität kann das haptische Fahrpedal durch den Aktuator zum Vibrieren oder Pulsieren angeregt werden, um dem Fahrer beispielsweise zu signalisieren, dass er durch ein Reduzieren der Betätigung des Fahrpedals in der augenblicklichen Fahrsituation Kraftstoff einsparen könnte.

Bei der Ansteuerung eines haptischen Fahrpedals kann es hilfreich sein, die Intensität, mit der das haptische Fahrpedal ein haptisch wahrnehmbares Signal erzeugt, an den aktuellen Fahrer anzupassen. Beispielsweise wird ein kleiner, leichter Fahrer ein haptisch wahrnehmbares Signal geringerer Intensität, d.h. z.B. geringerer Kraft und/oder geringerer Amplitude bevorzugen, als dies bei einem schweren Fahrer der Fall ist.

In dem Kraftfahrzeug können daher Maßnahmen getroffen sein, die es ermöglichen, die Intensität der Kraft, mit der das haptische Fahrpedal dem Fahrer ein haptisch wahrnehmbares Signal übermitteln soll, einzustellen.

Erfindungsgemäß soll nun der Einstellwert für diese Intensität der Kraft erfasst werden und mit dem Signal des Sitzsensors verglichen werden, um Letzeres automatisiert plausibilisieren zu können.

Mit anderen Worten kann analysiert werden, ob der Einstellwert für die von dem haptischen Fahrpedal auszuübende Kraftintensität zumindest innerhalb plausibler Grenzen mit dem das Gewicht des Fahrers angebenden Signal von dem Sitzsensor übereinstimmt. Sollte dies nicht zutreffen, d.h., sollte die Plausibilitätsprüfung fehlschlagen, können geeignete Gegenmaßnahmen eingeleitet werden. Zum Beispiel kann ein Warnhinweis ausgegeben werden, mit dem der Fahrer zum Aufsuchen einer Werkstatt aufgefordert wird.

Der Einstellwert zum Angeben der gewünschten Kraftintensität für das Fahrpedal kann eine Mehrzahl von Werten annehmen. Zum Plausibilisieren des Signals von dem Sitzsensor kann dann überprüft werden, ob das Signal von dem Sitzsensor innerhalb eines Bereiches liegt, der dem aktuell erfassten Einstellwert zugeordnet ist.

Als Beispiel kann der Einstellwert lediglich zwei unterschiedliche Werte annehmen, nämlich einen hohen Wert, der angibt, dass das Fahrpedal das haptisch wahrnehmbare Signal mit einer starken Intensität übermitteln soll, und einen entsprechend niedrigeren Wert, der ein schwächeres haptisch wahrnehmbares Signal auslösen soll. In diesem Fall kann davon ausgegangen werden, dass eine Ansteuerung für das haptische Fahrpedal den niedrigeren Einstellwert annehmen soll, wenn eine leichte Person das Fahrzeug fährt und im Gegensatz hierzu ein hoher Einstellwert angenommen wird, wenn eine schwere Person das Fahrzeug fährt.

Nachdem der Einstellwert erfasst wurde, kann dieser mit dem Signal von dem Sitzsensor des Fahrersitzes verglichen werden. Sollte in diesem Beispiel der Einstellwert eine hohe Kraftintensität angeben und das Signal von dem Sitzsensor ein hohes Gewicht des Fahrers angeben, wird davon ausgegangen, dass das Signal von dem Sitzsensor plausibel ist. Entsprechendes gilt für einen niedrigen Einstellwert der Kraftintensität des Fahrpedals, wenn das Signal des Sitzsensors ein geringes Gewicht des Fahrers angibt. Sollte dies jedoch nicht zutreffen, d.h., sollte das Signal von dem Sitzsensor angesichts des Einstellwertes für das Fahrpedal nicht plausibel sein, kann mit einer gewissen Wahrscheinlichkeit von einer Fehlfunktion des Sitzsensors ausgegangen werden.

Selbstverständlich kann der Einstellwert für die Kraftintensität des Fahrpedals auch mehr als zwei Werte annehmen können. In diesem Fall können auch die Signale von dem Sitzsensor genauer plausibilisiert werden.

Wenn beispielsweise der Einstellwert zehn verschiedene Werte annehmen kann, kann damit auch das Signal des Sitzsensors über zehn verschiedene Gewichtsbereiche hin plausibilisiert werden. Beispielsweise kann dann in 10-kg-Bereichen genau plausibilisiert werden, ob der Einstellwert des haptischen Fahrpedals zu dem Signal des Sitzsensors "passt". Dabei kann, je nachdem wie stark sich das Signal von dem Sitzsensor von dem Gewichtsbereich des aktuell eingestellten Einstellwertes für das haptische Fahrpedal unterscheidet, von einer entsprechenden Wahrscheinlichkeit für eine Fehlfunktion des Sitzsensors ausgegangen werden.

Der Einstellwert für das haptische Fahrpedal kann beispielsweise zu Beginn einer Fahrt mit dem Kraftfahrzeug eingestellt werden. Dabei kann der Einstellwert beispielsweise aufgrund einer manuellen Eingabe erfasst werden. Beispielsweise kann ein Fahrer beim Einsteigen in das Fahrzeug durch Betätigen von Schaltern oder ähnlichen Eingabemitteln angeben, mit welcher Intensität ein von dem Fahrpedal erzeugtes haptisch wahrnehmbares Signal generiert werden soll. Dabei wird davon ausgegangen, dass leichte Personen geringer intensive haptische Signale bevorzugen als schwere Personen, um im Bedarfsfall die von dem haptischen Fahrpedal erzeugte Gegenkraft leicht überbrücken zu können.

Alternativ kann der Einstellwert für das haptische Fahrpedal auch aufgrund einer automatischen Identifizierung des Fahrers erfasst werden. Beispielsweise kann die Identität des Fahrers in einem ihm gehörenden Fahrzeugschlüssel abgelegt sein, so dass das Fahrzeug beim Starten des Fahrzeugs mit diesem Schlüssel erkennen kann, dass beispielsweise ein zu dem Schlüssel gehörender leichtgewichtiger Fahrer auf dem Fahrersitz Platz genommen hat.

Es kann ferner vorgesehen sein, dass der Einstellwert des haptischen Fahrpedals, mit dem das Signal des Sitzsensors plausibilisiert werden soll, erst dann erfasst wird, wenn der Einstellwert über einen vorgegebenen Zeitraum unverändert geblieben ist. Damit kann z.B. vermieden werden, dass der Fahrer zu Beginn einer Fahrt den Einstellwert für das haptische Fahrpedal mehrfach variiert, um das von ihm als angenehm empfundene haptisch wahrnehmbare Signal finden zu können, und während dieses Suchens des individuell bevorzugten Einstellwertes bereits Fehlermeldungen aufgrund einer fehlgeschlagenen Plausibilisierung des Signals von dem Sitzsensor ausgegeben werden. Wenn beispielsweise über einen Zeitraum von zehn Minuten nach dem Starten des Fahrzeugs oder nach beispielsweise einem Auffordern des Fahrers zum Einstellen des Einstellwertes für das haptische Fahrpedal keine weitere Änderung des Einstellwertes vorgenommen wurde, kann davon ausgegangen werden, dass der Fahrer den zu seinem Gewicht passenden Einstellwert gefunden und eingestellt hat. Aufgrund dieser Einstellung des Einstellwertes kann dann das Signal von dem Sitzsensor plausibilisiert werden.

Um in einem Kraftfahrzeug die korrekte Funktion von Sitzsensoren zu überwachen, kann eine Vorrichtung zum Plausibilisieren des Signals von einem Sitzsensor vorgesehen sein, die dazu ausgelegt ist, das oben beschriebene Verfahren durchzuführen. Die Vorrichtung kann dabei beispielsweise in Form eines Steuergerätes in dem Fahrzeug implementiert sein. Das Steuergerät kann mit entsprechenden Schnittstellen zur Aufnahme der Signale sowohl von dem Sitzsensor als auch von Mitteln zur manuellen oder automatisierten Einstellung des Einstellwertes für das haptische Fahrpedal ausgestattet sein. Das Steuergerät kann dabei als Hardware und/oder Software implementiert sein.

Da das vorgeschlagene Verfahren Informationen von Sensoren oder anderen Komponenten verwenden kann, die ohnehin bereits für andere Funktionen in dem Fahrzeug vorgesehen sind, wie beispielsweise Sitzsensoren und Mittel zum Einstellen eines gewünschten Wertes für die Intensität von haptisch wahrnehmbaren Signalen eines Fahrpedals, kann das Verfahren ohne die Notwendigkeit zusätzlicher substanzieller struktureller Maßnahmen einfach einem Kraftfahrzeug implementiert werden. Insbesondere kann ein Zusatzaufwand beispielsweise durch das Vorsehen redundanter Sensoren an den Fahrzeugsitzen, durch entsprechende Verkabelungen und Anschlüsse an Steuergeräte bzw. deren Eingangsbeschaltung vermieden werden. Sicherheitskritische Fehlfunktionen eines Sitzsensors in einem Fahrzeug können durch das vorgeschlagene Plausibilisierungsverfahren einfach erkannt werden und entsprechende Gegenmaßnahmen eingeleitet werden bzw. entsprechende Warnhinweise abgegeben werden.

Das Verfahren kann dabei in einem programmierbaren Steuergerät vorzugsweise als reine Softwarefunktion implementiert werden. Ein entsprechendes Computerprogrammprodukt kann hierzu computerlesbare Anweisungen aufweisen, die das programmierbare Steuergerät dazu anweisen, das oben beschriebene Verfahren durchzuführen. Ein solches Computerprogrammprodukt kann auf einem computerlesbaren Medium wie z.B. einer CD, einer DVD, einem Flashspeicher oder ähnlichem gespeichert sein.

Es wird darauf hingewiesen, dass mögliche Merkmale, und Vorteile von erfindungsgemäßen Ausführungsformen hierin teilweise mit Bezug auf das vorgeschlagene Verfahren und teilweise mit Bezug auf die vorgeschlagene Vorrichtung beschrieben sind. Ein Fachmann wird erkennen, dass die Merkmale in geeigneter Weise miteinander kombiniert oder ausgetauscht werden können, um zu neuen Ausgestaltungen der Erfindung und damit verbundenen Vorteilen und Synergieeffekten zu gelangen.

### Kurze Beschreibung der Zeichnung

Nachfolgend werden Ausführungsformen der Erfindung mit Bezug auf die beigefügte Zeichnung beschrieben. Weder die Beschreibung noch die Zeichnung soll dabei als die Erfindung einschränkend ausgelegt werden sollen.

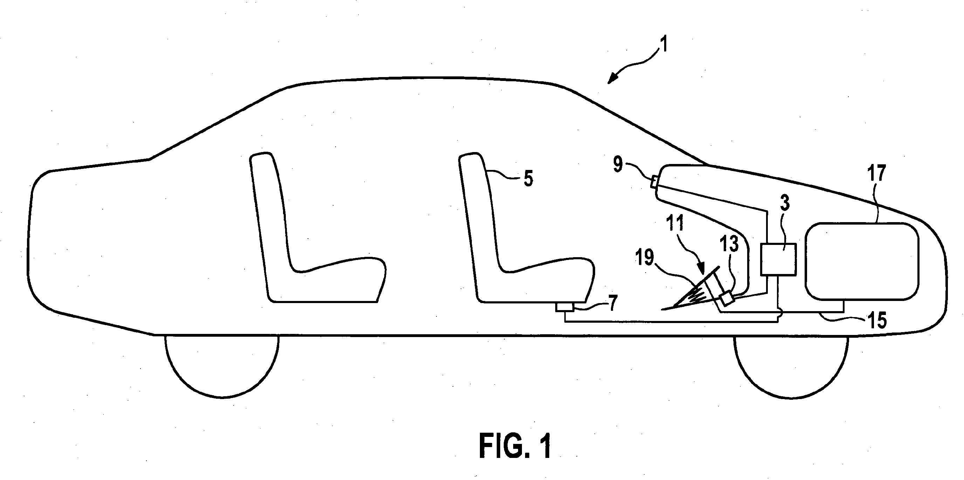

Fig. 1 zeigt ein Kraftfahrzeug mit einer Vorrichtung zum Ausführen eines Verfahrens gemäß einer Ausführungsform der vorliegenden Erfindung.

Die Zeichnung ist lediglich schematisch und nicht maßstabsgetreu.

### Ausführungsformen der Erfindung

Fig. 1 zeigt ein Fahrzeug 1 mit einem haptischen Fahrpedal 11. Das Fahrpedal 11 wird durch eine Feder 19 hin zu einer Ruhestellung gedrückt. Durch Niederdrücken des Fahrpedals 11 kann über eine Leitung oder über einen Seilzug 15 der Motor 17 des Fahrzeugs 1 zur Abgabe mechanischer Leistung veranlasst werden.

Um dem Fahrer haptisch wahrnehmbare Signale übermitteln zu können, verfügt das Fahrpedal 11 über einen Aktuator 13. Dieser Aktuator 13 kann eine Kraft auf das Fahrpedal 11 in Richtung hin zu dessen Ruheposition ausüben und damit eine Gegenkraft zu dem von dem Fahrer bewirkten Niederdrücken des Fahrpedals 11 erzeugen. Mit Hilfe dieser konstant, pulsierend oder vibrierend erzeugten Gegenkraft können dem Fahrer haptisch wahrnehmbar Signale angezeigt werden, um ihn beim Führen des Fahrzeugs in bestimmten Fahrsituationen zu unterstützen.

Das Steuergerät 3 kann mit einem Eingabemittel 9 gekoppelt sein. Mit Hilfe dieses Eingabemittels 9 kann der Fahrer einen Einstellwert z.B. manuell vorgeben, der dem Steuergerät 3 angibt, mit welcher Intensität, d.h. mit welcher Kraft oder Amplitude, der Aktuator 13 das haptisch wahrnehmbare Signal erzeugen soll.

An einem Fahrersitz 5 ist ein Sitzsensor 7 vorgesehen, mit Hilfe dessen eine Information über das Gewicht des auf dem Sitz 5 sitzenden Fahrers ermittelt werden kann. Der Sitzsensor 7 kann dabei das Gewicht in einem kontinuierlichen Wertebereich erfassen oder alternativ das Gewicht in Clustern z.B. in 10-kg-Schritten ermitteln.

Die von dem Sitzsensor 7 ermittelte Information wird an das Steuergerät 3 übertragen und dort mit dem zuvor eingestellten Wert für die gewünschte Intensität des von dem Fahrpedal erzeugten haptisch wahrnehmbaren Signals verglichen. Stimmt das von dem Sitzsensor 7 erzeugte Signal in plausiblen Grenzen mit dem aktuell eingestellten Wert für das haptische Fahrpedal überein, wird von einem korrekt funktionierenden Sitzsensor 7 ausgegangen. Bei unplausiblen Werten des Signals des Sitzsensors 7 im Vergleich zu den aktuell eingestellten Werten für die Intensität des haptisch wahrnehmbaren Signals wird mit einer gewissen Wahrscheinlichkeit von einer Fehlfunktion des Sitzsensors 7 ausgegangen und gegebenenfalls ein entsprechendes Warnsignal an den Fahrer ausgegeben.

## Patentansprüche

1. Verfahren zum Plausibilisieren eines Signals von einem Sitzsensor (7) zur Erfassung einer Information über ein Gewicht eines Fahrers in einem Kraftfahrzeug (1),
wobei das Verfahren folgenden Schritt aufweist:
Erfassen des Signals von dem Sitzsensor (7),
**dadurch gekennzeichnet**, däss das Verfahren die folgenden Schritte aufweist:
Erfassen eines Einstellwertes, der eine Intensität einer Kraft angibt, mit der ein Fahrpedal (11) dem Fahrer ein haptisch wahrnehmbares Signal übermitteln soll,
Plausibilisieren des Signals von dem Sitzsensor (7) durch Vergleichen mit dem erfassten Einstellwert.

2. Verfahren nach Anspruch 1, wobei der Einstellwert eine Mehrzahl von Werten annehmen kann und wobei zum Plausibilisieren des Signals von dem Sitzsensor (7) überprüft wird, ob das Signal von dem Sitzsensor (7) innerhalb eines Bereiches liegt, der dem aktuell erfassten Einstellwert zugeordnet ist.

3. Verfahren nach Anspruch 1 oder 2, wobei der Einstellwert aufgrund einer manuellen Eingabe erfasst wird.

4. Verfahren nach Anspruch 1 oder 2, wobei der Einstellwert aufgrund einer automatischen Identifizierung des Fahrers erfasst wird.

5. Verfahren nach einem der Ansprüche 1 bis 4. wobei der Einstellwert erst erfasst wird, wenn der Einstellwert über einen vorgegebenen Zeitraum unverändert geblieben ist.

6. Vorrichtung (3) zum Plausibilisieren eines Signals von einem Sitzsensor (7) zur Erfassung einer Information über ein Gewicht eines Fahrers in einem Kraftfahrzeug (1), wobei die Vorrichtung (3) dazu ausgelegt ist, ein Verfahren gemäß einem der Ansprüche 1 bis 5 durchzuführen.

7. Computerprogrammprodukt, welchen computerlesbare Anweisungen aufweist, die ein programmierbares Steuergerät (3) dazu anweisen, ein Verfahren gemäß einem der Ansprüche 1 bis 5 durchzuführen.

8. Computerlesbares Medium mit einem darauf gespeicherten Computerprogrammprodukt gemäß Anspruch 7.

## Claims

1. Method for checking the plausibility of a signal from a seat sensor (7) for acquiring an item of information relating to a weight of a driver in a motor vehicle (1),
the method having the following step of:
acquiring the signal from the seat sensor (7),
**characterized in that** the method has the following steps of:
acquiring a setting value which indicates an intensity of a force with which an accelerator pedal (11) is intended to transmit a haptically perceptible signal to the driver,
checking the plausibility of the signal from the seat sensor (7) by comparison with the acquired setting value.

2. Method according to Claim 1, the setting value being able to assume a plurality of values and, in order to check the plausibility of the signal from the seat sensor (7), a check being carried out in order to determine whether the signal from the seat sensor (7) is within a range assigned to the currently acquired setting value.

3. Method according to Claim 1 or 2, the setting value being acquired on the basis of a manual input.

4. Method according to Claim 1 or 2, the setting value being acquired on the basis of automatic identification of the driver.

5. Method according to one of Claims 1 to 4, the setting value being acquired only when the setting value has remained unchanged over a predefined period.

6. Device (3) for checking the plausibility of a signal from a seat sensor (7) for acquiring an item of information relating to a weight of a driver in a motor vehicle (1), the device (3) being designed to carry out a method according to one of Claims 1 to 5.

7. Computer program product having computer-readable instructions which instruct a programmable control device (3) to carry out a method according to one of Claims 1 to 5.

8. Computer-readable medium having a computer program product according to Claim 7 stored thereon.

## Revendications

1. Procédé pour déterminer la plausibilité d'un signal provenant d'un capteur de siège (7) destiné à collecter une information sur un poids d'un conducteur dans un véhicule automobile (1),
le procédé comprenant l'étape suivante :
collecte du signal provenant du capteur de siège (7),
**caractérisé en ce que** le procédé comprend les étapes suivantes :
collecte d'une valeur de réglage qui indique une intensité d'une force avec laquelle une pédale d'accélérateur (11) doit communiquer au conducteur un signal perceptible de façon haptique,
détermination de la plausibilité du signal provenant du capteur de siège (7) par comparaison avec la valeur de réglage collectée.

2. Procédé selon la revendication 1, selon lequel la valeur de réglage peut prendre une pluralité de valeurs et selon lequel, en vue de déterminer la plausibilité du signal provenant du capteur de siège (7), un contrôle est effectué pour vérifier si le signal provenant du capteur de siège (7) se trouve à l'intérieur d'une plage qui est associée à la valeur de réglage actuellement collectée.

3. Procédé selon la revendication 1 ou 2, selon lequel la valeur de réglage est collectée sur la base d'une saisie manuelle.

4. Procédé selon la revendication 1 ou 2, selon lequel la valeur de réglage est collectée sur la base d'une identification automatique du conducteur.

5. Procédé selon l'une des revendications 1 à 4, selon lequel la valeur de réglage n'est collectée que si la valeur de réglage est restée inchangée pendant une période prédéfinie.

6. Dispositif (3) pour déterminer la plausibilité d'un signal provenant d'un capteur de siège (7) destiné à collecter une information sur un poids d'un conducteur dans un véhicule automobile (1), le dispositif (3) étant conçu pour mettre en oeuvre un procédé selon l'une des revendications 1 à 5.

7. Produit de programme informatique, lequel possède des instructions lisibles par ordinateur qui commandent à un contrôleur programmable (3) de mettre en oeuvre un procédé selon l'une des revendications 1 à 5.

8. Support lisible par ordinateur sur lequel est enregistré un produit de programme informatique selon la revendication 7.
